# EUROPEAN PATENT APPLICATION

(11) **EP 1 085 643 A2**
(43) Date of publication of application: **21.03.2001**
(21) Application number: 00119758.1
(22) Date of filing: 11.09.2000
(51) Int. Cl.: H02K 9/04

(54) **Permanent-magnet synchronous motor for lift winches**

(30) Priority: 13.09.1999 IT FI990189
(71) Applicant: COBIANCHI LIFTTEILE AG, CH-3110 Münsingen (CH)
(72) Inventor: Meng, Achim Helmut, 73642 Welzheim (DE)
(74) Representative: Gervasi, Gemma, Dr.

(57) **Abstract**

A permanent-magnet synchronous motor comprising an external rotor (1), which is able to turn fixedly with a shaft (2), (2) and which delimits with a closing flange (14) a compartment in which a stator (10) is enclosed, characterized in that it is provided with means (17, 17') for internal ventilation.

## Description

### Field of the invention

The present invention regards an electric motor for moving lifts. More in particular, the present motor is devised with the aim of providing up to 1000 kg of lifting power or more, with a suspension ratio of 1:1, and up to 2000 kg or more, with a suspension ratio of 2:1, without any need for motion reducers.

In addition, the present invention refers to applications in which the lift compartment may be hoisted up to 40 metres at a speed of up to 1.6 m/sec, without compensation of cable weight and at a speed of up to 2.5 m/sec or beyond with compensation of cable weight. In the latter case, the lift compartment can be hoisted up to 80 metres and beyond.

### Prior Art

With the aim of affording high lifting-load capacities (thereby advantageously enabling the development of a single winch for a wide range of commercial applications) but without using reducers, there have for some time now been proposed in the sector a number of winches based on electric motors having high energy density, such as permanent-magnet synchronous motors with electronic switching.

On the basis of this technology, there has been a considerable spread of motors with disk rotors and motors with external rotors.

Unfortunately, notwithstanding the theoretical potentialities afforded by synchronous motors, the permanent-magnet motors so far developed and actually installed do not go beyond a load capacity of approximately 630 kg with a suspension ratio of 1:1 and a speed of 1.6 m/sec, with cable weight compensation, and hence are far from being universally usable, i.e., usable for a wide range of applications.

More in particular, it is known that with the use of motors having high energy density the limits described above are to a fair extent due to the difficulty of dissipating in an effective way the heat that is inevitable if high torque is to be achieved, above all in an installation environment characterized by limited space and reduced dimensions.

### Purpose of the invention and summary

The purpose of the present invention is to overcome the drawbacks referred to above and to propose a synchronous motor for lifts without motor reducers, characterized by a lifting capacity of more than 1000 kg and a suspension ratio of 1:1, and a lifting capacity of more than 2000 kg with a suspension ratio of 2:1. A further purpose of the invention is to provide a motor with high reliability and simplicity of operation.

The above purposes are achieved according to the invention by providing a permanent-magnet synchronous motor with external rotor, in which the motor body is provided with inlet and outlet holes, through which, by means of a fan located inside, an air circulation is provided which cools the internal surfaces of both the stator and the rotor, and eliminates the desired amount of heat.

Preferably, the ventilation is of the forced type and is obtained by means of blades which are independent of the rotor shaft and are provided with a driving motor of its own.

In a second embodiment, the air circulation is achieved by means of blades which are coaxial with and fixed to the motor shaft in such a way as to guarantee spontaneous ventilation during operation of the motor.

The advantages obtained are basically represented by better motor efficiency and higher levels of performance with respect to lift winches of a known type, given the same overall dimensions.

### Description of the figures

These and further advantages will be evident from the ensuing description and from the attached drawings, which are provided purely to furnish non-limiting examples, and in which:

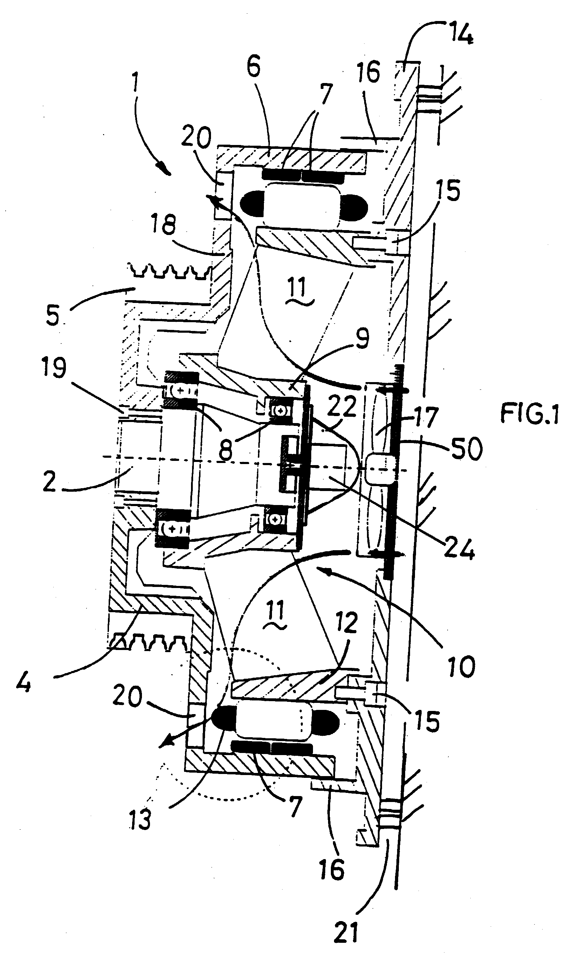

- Fig. 1 is a side sectional diagram of a motor according to the invention, provided with forced ventilation;
- Fig. 2 illustrates a detail of a schematic diagram representing the ventilation of the motor of Fig. 1;
- Fig. 3 illustrates a side sectional diagram of a motor according to the invention, provided with spontaneous ventilation;
- Fig. 4 is a partial front sectional view of an embodiment of the motor; and
- Fig. 5 is a side view of the motor of Fig. 4 taken along the section A-A.

### Detailed description of the invention

With reference to the attached drawings, a motor according to the invention basically consists of a rotor 1 fixed to a central shaft 2. The rotor 1 is in the form of a cylindrical shell made up of a first section 4 on which is mounted a drive pulley 5 for moving the cables of the lift, and a second section 6 which has a diameter larger than the first section 4 and is joined to the latter by a wall 18 having the shape of an annulus.

The larger section 6 is moreover provided with permanent magnets 7 arranged along its internal radial surface.

The shaft 2 is fixed by means of screws 19 to the rotor 1 and is mounted on a pair of bearings 8 fitted in a central assembly 9 of the stator 10 of the motor. Set radially with respect to the central assembly 9 are fins 11 enclosed within a cylindrical ring 12, outside which the stator windings 13 are made, the stator windings 13 being separated from the magnets 7 by an appropriate magnetic gap, whilst at the rear of the central assembly 9 an encoder 24 is provided, of a type in itself known.

The motor is closed at the rear by a vertical flange 14 designed to be fixed to a wall when the motor is installed. The flange 14 is fixed by means of screws 15 to the ring 12 and is provided with a raised edge 16 which surrounds the mobile outer wall of the rotor 1 without ever coming into contact with the latter.

According to the invention, in a position coaxial to the shaft 2, within the flange 14 a fan 17 is mounted, which is supplied autonomously and which causes a flow of air to pass through the inside of the motor body until it comes out through holes 20 made along the annulus-shaped wall 18, the holes 20 being made in the form of slots or circular holes sufficient in number to dissipate the heat.

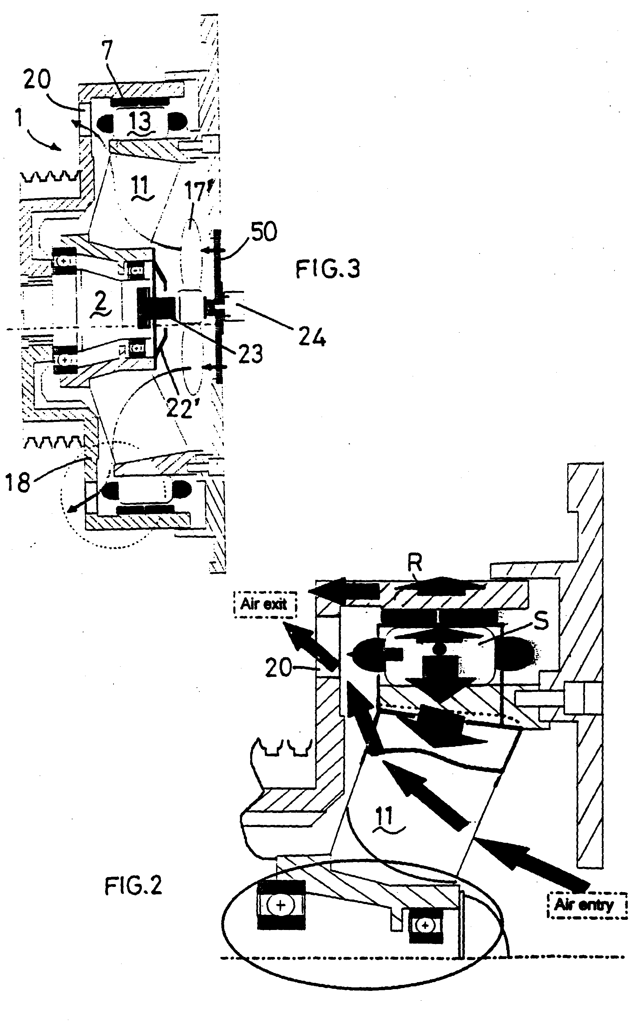

In its path, represented by arrows in Fig. 2, the cooling air, drawn in by the fan 17 from the rear of the motor through a grill 50 laps against the fins of the stator, the outer surface of the assembly 9, and the inner surface of the section 4, until it comes out through the slots or holes 20.

Figure 2 illustrates in greater detail the ventilation scheme and the areas of thermal exchange of the heat generated by the rotor (area R) and the heat generated by the stator windings (area S).

As regards the rotor, the heat generated is dissipated by the outer surface of the rotor, which is appropriately shaped, and is further dissipated by the flow of ventilating air which laps against the front wall before it comes out of the slots or holes 20.

As regards the heat generated by the stator, this is dissipated prevalently by means of the internal flow of cooling air, the source of which is the cool air drawn in at the rear of the motor.

In one embodiment, the fan has a running speed of 2800 r.p.m. for a flow rate of cooling air of 330 m³/h.

The air flows along the spider structure of the stator which functions as a heatsink with guide ways for the air and presents an optimized surface to favour dissipation of heat.

Advantageously, the flow of cooling air comes into contact with the front part of the windings and thus contributes to direct cooling of one of the hottest parts of the motor.

The particular effectiveness of the cooling system described above moreover prevents adverse thermal effects on the bearings.

According to the invention, the ventilation is controlled by a temperature sensor which enables the fan to go into action when the motor reaches a pre-set threshold temperature and stops the fan when the temperature has dropped back below the threshold value.

In this way, in periods of intensive use of the lift, ventilation continues even when the motor is not turning, so improving the cooling action, whilst in periods when the lift is practically unused (for instance, at night), the ventilation system does not need to operate.

To improve cooling efficiency, a curved shield 22 is also provided, which is fixed at the front at the internal end of the central assembly 9 and in front of the fan 17.

Advantageously, the shield 22 reduces the turbulence of flow arriving from the fan 17 and deflects it towards the fins of the stator, so improving heat exchange.

For the fan 17 to have a sufficient intake of cool air, the flange 14 must be installed on a wall in such a way that an appropriate gap 21, of not less than approximately 150 mm, is left in between.

Alternatively, the fan may act as a suction fan. In this case, the flow of air arrives from the slots or holes 20, traverses the inside of the motor, and comes out through the rear grill 50 in a direction opposite to that indicated by the arrows in Fig. 2.

In a second embodiment, represented schematically in Fig. 3, the fan is obtained by means of blades 17' fitted directly on a prolongation 23 of the shaft 2 in such a way as to guarantee a spontaneous ventilation during operation of the motor.

In this version, the encoder 24 is fixed on the rear grill 50 and connected to the prolongation 23.

In this case, the ventilation is effective only during operation of the motor and is conditioned by the speed of rotation of the rotor shaft. However, thanks to the structure of the motor of the present invention, the elimination of heat achieved is sufficient to guarantee a considerable increase in torque as compared to traditional solutions.

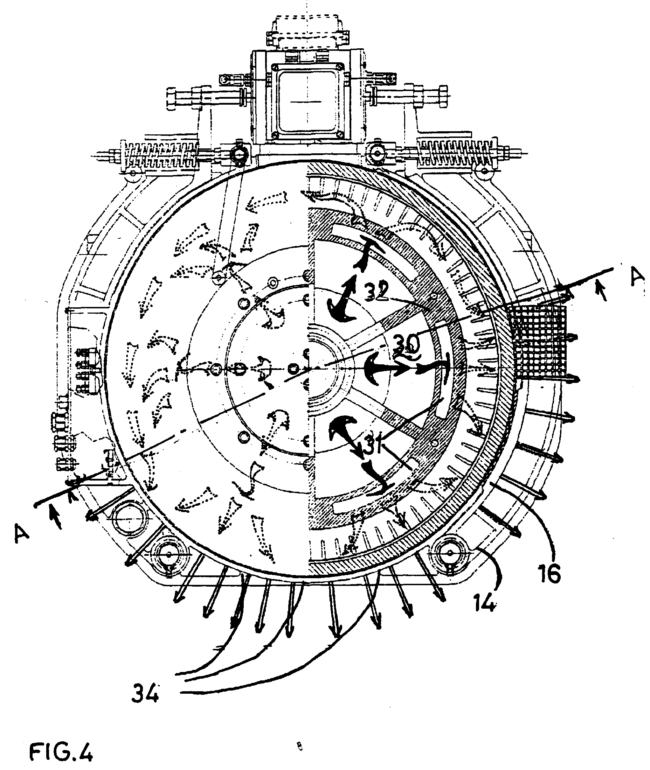

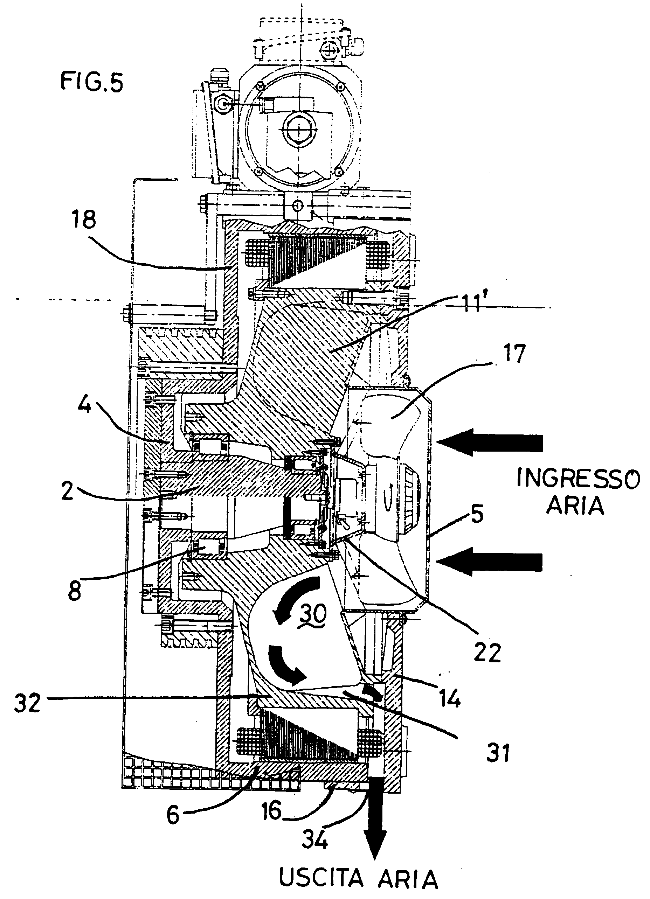

With reference to Figures 4 and 5, a preferred embodiment of the motor according to the invention is described, in which the fins 11', instead of being traversed axially by the flow of cool air, intercept the flow and deflect it by means of appropriate shaping in the form of loops or pockets 30 of a body 32 in which the partition walls of the pockets 30 are made up of the fins 11' themselves.

As may be seen from the disposition of the arrows represented in Figures 4 and 5, the flow of incoming cool air impinges on the pockets 30 and is thus deflected, first radially and then axially, in a direction opposite to its incoming direction. The flow of air proceeds until it passes through the openings 31 made in the peripheral wall 12 of the body 32. The openings 31 communicate with the pockets 30 and have an outlet on the front edge of the body 32. Once the air has come out through the openings 31, it laps against the hot parts of the motor and proceeds along the peripheral circular wall of the motor until it encounters one or more external openings 34, from which it can be dissipated into the environment.

Advantageously, the openings 34 basically face downwards and radially outwards in such a way that they can never pick up dust or other falling debris, whether the motor is installed vertically, as illustrated in Fig. 5, or installed horizontally.

In the example given, the invention has been described with reference to a synchronous motor with permanent-magnet external rotor, since this is particularly suited for implementation of the invention and for the specific sector of use of the motor.

It is, however, understood that the invention may be equivalently applied to other lift motors with high energy density, albeit without departing from the sphere of protection provided by the present industrial patent.

## Claims

1. A permanent-magnet synchronous motor comprising an external rotor (1) turning fixedly with a shaft (2), a rear closing flange (14), and an internal stator (10) which supports the shaft (2), characterized in that it is provided with means (17, 17') for internal ventilation.

2. A motor according to Claim 1, characterized in that said means (17) are forced-ventilation means.

3. A motor according to Claim 2, characterized in that said means (17) consist of an internal fan (17) which is set coaxial with the shaft (2) and is able to draw in cool air through an air intake (5) and to force the flow of air towards outlet slots or holes (20).

4. A motor according to Claim 3, characterized in that said rotor is made up of a first cylindrical section (4) fixed to the shaft (2) and joined, by means of an annulus-shaped wall (18), to a second cylindrical section (6) of larger diameter than the first section and provided, on its internal wall, with permanent magnets (7); and said stator (10) consists of a spider structure made up of a central assembly (9) and of a number of fins (11) which are substantially radial to the shaft (2) and are enclosed within a peripheral wall (12) that carries stator windings (13) in a position to facing said magnets (7); in which said air intake consists of a grill (50) set in the flange (14) in a position corresponding to the fan (17), and said air-outlet holes (20) are made on said wall (18).

5. A motor according to Claim 3, characterized in that said rotor is made up of a first cylindrical section (4) fixed to the shaft (2) and joined, by means of an annulus-shaped wall (18), to a second cylindrical section (6) of larger diameter than the first section and provided, on its internal wall, with permanent magnets (7); and said stator (10) consists of a spider structure made up of a central body (32) in which are made a number of pockets (30) that communicate with the environment by means of openings (31) made in the peripheral wall (12), in which said air intake consists of a grill (50) set within the flange (14) in a position corresponding to the fan (17), and said air-outlet holes consist of one or more openings (34) made laterally along a raised edge (16) of said closing flange (14).

6. A motor according to Claim 5, characterized in that the flow of cooling air coming out of the openings (31) follows a peripheral path of circulation along said edge (16) until it encounters said external openings (34) for dispersion of the flow of heated air into the environment.

7. A motor according to Claim 5, characterized in that said one or more openings are basically made along the lower half part of the edge (16).

8. A motor according to Claim 4, characterized in that said fins (11) present a profile for guiding the flow of air and a surface which is optimized for dissipation of heat.

9. A motor according to Claim 4 or Claim 5, characterized in that it is provided with a shield (22) set in front of the fan (17) in order to reduce the turbulence of the flow of air coming from the fan and to deflect the cool air towards the fins of the stator, thus improving heat exchange.

10. A motor according to Claim 2, characterized in that it is provided with a temperature sensor designed to activate/deactivate the fan (17) when a pre-set threshold temperature of the motor is reached.

11. A motor according to Claim 1, characterized in that said means (17) are means of spontaneous ventilation.

12. A motor according to Claim 11, characterized in that said spontaneous-ventilation means (17) consist of a blading (17') fitted on a prolongation (23) of the shaft (2) and designed to suck in cool air from an air intake (50) and to force the flow of air towards outlet slots or holes (20).

13. A motor according to Claim 12, characterized in that said rotor is made up of a first cylindrical section (4) fixed to the shaft (2) and joined, by means of an annulus-shaped wall (18), to a second cylindrical section (6) of larger diameter than the first section and provided, on its internal wall, with permanent magnets (7); and said stator (10) consists of a spider structure made up of a central assembly (9) and of a number of fins (11) which are substantially radial to the shaft (2) and are enclosed within a peripheral wall (12) that carries stator windings (13) in a position facing said magnets (7); in which said air intake consists of a grill (50) set within the flange (14) in a position corresponding to the blades (17), and said air-outlet slots or holes (20) are made on said wall (18).

14. A motor according to Claim 13, characterized in that said fins (11) present a profile for guiding the flow of air and a surface which is optimized for dissipation of heat.

15. A motor according to Claim 14, characterized in that it is provided with a shield (22') set in front of the blades (17') in order to reduce the turbulence of the flow of air coming from the fan and to deflect the cool air towards the fins of the stator, thus improving heat exchange.
